# FASCICULE DE BREVET EUROPEEN

(11) **EP 3 544 896 B1**
(45) Date de publication et mention de la délivrance du brevet: **06.01.2021**
(21) Numéro de dépôt: 17812004.4
(22) Date de dépôt: 20.11.2017
(51) Int. Cl.: B64G 1/40, F02K 9/50, F02K 9/56

(54) **SYSTEME CORRECTEUR D'EFFET POGO**
SYSTEM ZUR KORREKTUR VON POGO-SCHWINGUNG
SYSTEM FOR CORRECTING POGO OSCILLATION

(30) Priorité: 28.11.2016 FR 1661553
(43) Date de publication de la demande: 02.10.2019
(73) Titulaire: ArianeGroup SAS, 75015 Paris (FR)
(72) Inventeur: BECRET, Philippe, 92100 Boulogne Billancourt (FR); CINGAL, Benoît, Mathieu, André, 27200 Vernon (FR)
(74) Mandataire: Cabinet Beau de Loménie
(86) Numéro de dépôt international: PCT/FR2017/053165
(87) Numéro de publication internationale: WO 2018/096244

(56) Documents cités:
- WO-A1-2016/051047
- WO-A1-2016/120571
- FR-A1- 2 499 641
- FR-A1- 2 975 440

## Description

### DOMAINE DE L'INVENTION

Le présent exposé concerne un système correcteur d'effet POGO pour un système d'alimentation en propergol liquide d'un moteur-fusée.

Un tel système correcteur d'effet POGO peut être utilisé pour tout type de propergol liquide et pour tout type de moteur-fusée, civil ou militaire.

### ETAT DE LA TECHNIQUE ANTERIEURE

Dans le domaine des fusées à propergols liquides, on a donné le nom d'effet POGO à l'entrée en résonance d'un propergol liquide dans le circuit d'alimentation du moteur-fusée avec des oscillations mécaniques de la fusée. Comme la poussée du moteur-fusée varie avec le débit de propergol fourni par le circuit d'alimentation, une telle entrée en résonance peut causer des oscillations rapidement divergentes, et donc donner lieu à des difficultés de guidage, et même à des dommages pouvant aller jusqu'à la perte totale de la charge utile, voire du véhicule. Le nom d'effet POGO ne provient pas d'un acronyme, mais des « pogo sticks » ou échasses sauteuses, jouets formés par une tige à ressort dont les bonds ont rappelé aux techniciens les oscillations longitudinales violentes des fusées provoquées par cet effet. Depuis le début du développement des fusées à propergols liquides, il s'est donc révélé très important de prévoir des systèmes correcteurs d'effet POGO. Par « système correcteur d'effet POGO », on entend tout système apte à supprimer totalement les oscillations POGO ou à les limiter à une intensité suffisamment faible pour ne pas causer de difficultés de guidage ou de dommages du véhicule.

Parmi les systèmes correcteurs d'effet POGO, on connaît notamment les systèmes de type capacitif, divulgués par exemple dans le brevet français n° 2 975 440. Dans un tel système, le réservoir d'un accumulateur hydraulique est disposé autour de la conduite d'une ligne d'alimentation en propergol liquide du moteur-fusée (par exemple, la ligne d'alimentation en oxygène liquide (LOx)), et communique avec cette conduite d'alimentation via des orifices de communication pratiqués dans sa partie inférieure. Un débit constant de gaz (par exemple de l'hélium (He)) est injecté dans la partie supérieure du réservoir, de manière à entretenir une bulle de gaz dans le réservoir, et un tube plongeur de rejet relie l'interface liquide-gaz à la conduite d'alimentation en propergol liquide, une dépression étant entretenue dans le tube de rejet afin d'assurer l'aspiration du gaz en excès à l'interface liquide-gaz.

Toutefois, un tel accumulateur hydraulique n'est pas toujours suffisant pour se prémunir efficacement du risque POGO : en effet, l'effet principal d'un tel accumulateur, outre l'introduction d'un amortissement, consiste essentiellement à déplacer la fréquence du mode hydraulique de la conduite d'alimentation. Or, les modes de structures peuvent évoluer au cours du vol de telle sorte qu'un mode hydraulique corrigé pour éviter le couplage avec un mode de structure particulier à bas régime pourra potentiellement entraîner un couplage avec un autre mode de structure à plus haut régime. Il n'est ainsi pas toujours possible d'identifier une fréquence hydraulique unique permettant d'éviter tout couplage avec les différents modes de structure du moteur-fusée dans tous les régimes de fonctionnement envisagés.

Pour répondre à cette difficulté, il a alors été imaginé des mécanismes permettant de modifier la capacité de l'accumulateur en cours de vol et donc de modifier la fréquence du mode hydraulique afin d'éviter le couplage avec certains modes de structure même en cas d'évolution de ces derniers au cours du vol.

Le brevet français n° 2 975 440 propose ainsi par exemple de régler le volume de gaz présent dans l'accumulateur en modifiant la longueur du tube de rejet ou en prévoyant plusieurs tubes de rejet de longueurs différentes et munies d'électrovannes de purge. Toutefois, de telles solutions sont complexes et couteuses à mettre en œuvre. D'autres systèmes correcteurs d'effet POGO sont connus des documents WO 2016/120571, FR 2 499 641 et WO 2016/051047.

Il existe donc un réel besoin pour un système correcteur d'effet POGO pour un système d'alimentation en propergol liquide d'un moteur-fusée qui soit dépourvu, au moins en partie, des inconvénients inhérents aux configurations connues précitées.

### PRESENTATION DE L'INVENTION

Le présent exposé concerne un système correcteur d'effet POGO pour un système d'alimentation en propergol liquide d'un moteur-fusée, comprenant une partie de conduite d'alimentation en propergol liquide, un accumulateur hydraulique, comprenant un réservoir relié à la partie de conduite d'alimentation par au moins un passage de prélèvement, dans lequel le réservoir comprend au moins une première et une deuxième cavité, fermées chacune par une paroi supérieure, la paroi supérieure de la première cavité s'étendant à un niveau supérieur, c'est-à-dire à une hauteur supérieure, à celui de la paroi supérieure de la deuxième cavité, dans lequel la première et la deuxième cavités sont munies chacune d'une alimentation en gaz distincte, l'alimentation en gaz de la deuxième cavité au moins étant commandable, dans lequel la deuxième cavité comprend à son extrémité supérieure au moins un passage de communication la reliant à la première cavité, et dans lequel chaque cavité est reliée à la partie de conduite d'alimentation par au moins un passage de rejet débouchant dans ladite cavité à un niveau intermédiaire compris entre ledit au moins un passage de prélèvement et la paroi supérieure de ladite cavité, le passage de rejet de la deuxième cavité débouchant dans la deuxième cavité à un niveau inférieur au niveau auquel le passage de rejet de la première cavité débouche dans la première cavité.

Grâce à une telle configuration, la capacité de l'accumulateur hydraulique peut être modifiée facilement afin d'accorder le mode hydraulique de la partie de conduite selon la phase de vol et le régime du moteur.

En effet, lorsque l'alimentation en gaz de la deuxième cavité est coupée, du gaz est injecté et stocké uniquement dans la première cavité : le volume de gaz présent dans l'accumulateur est donc réglé par la distance séparant le passage de rejet de la première cavité de la paroi supérieure de la première cavité, ce volume de gaz correspondant à une première capacité de l'accumulateur et donc à un premier mode hydraulique.

En revanche, lorsque l'alimentation en gaz de la deuxième cavité est activée, du gaz est injecté également dans la deuxième cavité et remplit cette dernière jusqu'au niveau de son propre passage de rejet : le volume de gaz présent dans l'accumulateur correspond donc à la somme du volume de gaz présent dans la première cavité, inchangé, et du volume de gaz désormais présent dans la deuxième cavité. En conséquence, on obtient ainsi une deuxième capacité de l'accumulateur, supérieure à la première, et donc un deuxième mode hydraulique dont la fréquence est inférieure au premier mode hydraulique.

Pour repasser au premier mode, il suffit alors de couper à nouveau l'alimentation en gaz de la deuxième cavité : le gaz présent dans la deuxième cavité s'écoule alors dans la première cavité via le passage de communication où il est éliminé au fur et à mesure par le passage de rejet de la première cavité. La deuxième cavité est ainsi rapidement vidée afin de retrouver la situation initiale dans laquelle seule la première cavité comprend un volume de gaz.

Ainsi, grâce à une telle configuration, il est possible de modifier la capacité de l'accumulateur hydraulique, et donc de régler la fréquence du mode hydraulique de la partie de conduite, simplement en activant ou désactivant l'alimentation en gaz de la deuxième cavité.

Cette configuration ne fait donc pas intervenir d'électrovanne de purge ou d'autre système complexe d'ajustement du volume de gaz, la purge de la deuxième cavité étant réalisée automatiquement, c'est-à-dire de façon passive et sans intervention extérieure, par gravité, grâce au passage de communication et à la différence de hauteur des cavités. Cette configuration est donc moins couteuse et plus facile à mettre en œuvre.

Dans certains modes de réalisation, la paroi supérieure de la deuxième cavité est inclinée, de préférence en direction du passage de communication. On facilite ainsi l'évacuation du gaz par gravité vers la première cavité ; on peut notamment former de cette manière un entonnoir convergeant vers le passage de communication.

Dans certains modes de réalisation, le passage de rejet de la première cavité débouche dans la première cavité à un niveau inférieur à celui du passage de communication. De cette manière, on assure la régularité de l'interface liquide-gaz dans la première cavité.

Dans certains modes de réalisation, le passage de rejet de la première cavité débouche dans la première cavité sensiblement au même niveau que le passage de communication. Autrement dit, la bouche du passage de rejet et le passage de communication se situent sensiblement dans un même plan horizontal, perpendiculaire à la direction locale de la gravité. De cette manière, la deuxième cavité se vide intégralement lorsque son alimentation en gaz est désactivée.

Dans certains modes de réalisation, le réservoir comprend une paroi de partition séparant les première et deuxième cavités. Il s'agit là d'une manière simple et compacte d'agencer les première et deuxième cavités.

Dans certains modes de réalisation, le passage de communication est prévu au sommet de la paroi de partition. Ceci permet de vider complètement la deuxième cavité.

Dans certains modes de réalisation, la paroi de partition s'étend dans une partie seulement du réservoir. Autrement dit, la paroi de partition ne s'étend pas en travers de l'intégralité du réservoir ; elle ne cloisonne pas intégralement le réservoir en deux chambres distinctes : le réservoir possède ainsi un volume commun communiquant avec les première et deuxième cavités. Ceci est une configuration simple et compacte facilitant le passage du propergol dans chacune des cavités du réservoir.

Dans certains modes de réalisation, l'extrémité inférieure de la paroi de partition se situe à un niveau inférieur au niveau auquel le deuxième passage de rejet débouche dans la deuxième cavité. Ceci évite qu'une partie du gaz de la deuxième cavité ne bascule dans la première cavité par-dessous la paroi de partition lorsque l'interface liquide-gaz s'incline, par exemple sous l'effet d'une accélération latérale. Une distance verticale correspondant à au moins 20% de la largeur de la deuxième cavité, mesurée perpendiculairement à la paroi de partition, sépare ainsi de préférence l'extrémité inférieure de la paroi de partition et le deuxième passage de rejet. Une telle distance verticale permet de supporter une inclinaison d'environ 10° de l'interface liquide-gaz sans que celle-ci ne dépasse l'extrémité inférieure de la paroi de partition.

Dans certains modes de réalisation, la section de passage séparant l'extrémité inférieure de la paroi de partition de la paroi inférieure du réservoir est au moins cinq fois plus grande, de préférence dix fois plus grande, que la section de passage du passage de prélèvement. De cette manière, la restriction de passage du propergol entre les deux cavités représentée par la paroi de partition est négligeable devant celle représentée par le passage de prélèvement : en conséquence, il est possible de considérer que la résistance et l'inertie (inductance) du passage de prélèvement est identique pour les deux cavités.

Dans d'autres modes de réalisation, la section de passage séparant l'extrémité inférieure de la paroi de partition de la paroi inférieure du réservoir est au plus cinq fois plus grande, de préférence deux fois plus grande, que la section de passage du passage de prélèvement. Dans un tel cas, la restriction formée par la paroi de partition ne peut plus être négligée, ce qui modifie la résistance et l'inertie (inductance) équivalentes du passage de prélèvement : outre le changement de capacité, l'activation de l'alimentation en gaz de la deuxième cavité entraîne ainsi également une modification de la résistance et de l'inertie du système, ce qui peut faciliter l'accordage du système.

Dans certains modes de réalisation, la paroi de partition cloisonne complètement le réservoir. Le réservoir comprend ainsi deux chambres distinctes comprenant chacune un volume de liquide et, lorsque l'alimentation en gaz est activée, un volume de gaz.

Dans certains modes de réalisation, au moins un orifice de remplissage est prévu dans la partie inférieure de la paroi de partition. Un tel orifice de remplissage permet le remplissage en liquide de la deuxième chambre depuis la première chambre. Cet orifice de remplissage est prévu à un niveau inférieur au niveau du passage de rejet le plus bas.

Dans d'autres modes de réalisation, chaque chambre est reliée à la partie de conduite d'alimentation par au moins un passage de prélèvement.

Dans certains modes de réalisation, la section de passage du passage de communication est calibrée de manière à permettre la vidange d'une bulle de gaz présente dans la deuxième cavité en moins de 30 s.

Dans certains modes de réalisation, la section de passage du passage de communication est calibrée de manière à permettre la vidange d'une bulle de gaz présente dans la deuxième cavité en moins de 1 s. Ceci permet un basculement rapide entre les deux modes hydrauliques du système afin de s'adapter à un changement de régime soudain.

Dans certains modes de réalisation, la section de passage du passage de communication est calibrée de manière à laisser passer un débit compris entre 40 et 60% du débit de l'alimentation en gaz de la deuxième cavité.

Dans certains modes de réalisation, la section de passage comprend au moins un orifice de communication.

Dans certains modes de réalisation, le diamètre de l'orifice de communication est compris entre 1 et 5 mm, de préférence entre 1,5 et 3 mm.

Dans certains modes de réalisation, les passages de rejet des première et deuxième cavités débouchent dans la partie de conduite d'alimentation par des orifices de rejet communs. Cette mutualisation permet de simplifier la construction des passages de rejet et de réduire leur impact sur l'écoulement dans la partie de conduite d'alimentation.

Dans certains d'autres modes de réalisation, les passages de rejet des première et deuxième cavités débouchent dans la partie de conduite d'alimentation par des orifices de rejet distincts. Ceci permet d'éviter le risque que du gaz de l'une des cavités soit refoulé vers l'autre cavité. Ceci offre également une liberté de conception plus importante et simplifie notamment la mise en place du système correcteur d'effet POGO lorsque la partie de conduite est coudée.

Dans certains modes de réalisation, les passages de rejet sont dépourvus de vannes.

Dans certains modes de réalisation, le réservoir de l'accumulateur hydraulique entoure au moins partiellement la partie de conduite d'alimentation.

Dans certains modes de réalisation, le réservoir de l'accumulateur hydraulique entoure complètement, de préférence de manière axisymétrique, la partie de conduite d'alimentation. Une telle configuration est particulièrement adaptée aux configurations axisymétriques.

Dans certains modes de réalisation, les première et deuxième cavités sont concentriques, la deuxième cavité étant de préférence prévue radialement à l'extérieur de la première cavité. Une telle configuration est particulièrement simple et compacte.

Dans certains modes de réalisation, le réservoir de l'accumulateur hydraulique est prévu sur le côté de la partie de conduite d'alimentation. Lorsque la partie de conduite d'alimentation forme un coude, le réservoir peut être prévu à l'extérieur du coude, de préférence de manière symétrique par rapport au plan du coude.

Dans certains modes de réalisation, les première et deuxième cavités s'étendent l'une après l'autre circonférentiellement.

Dans certains modes de réalisation, la partie de conduite est configurée pour être reliée en amont à une alimentation en propergol liquide (LOx) et relié en aval à une turbopompe menant elle-même à une chambre de combustion.

Dans certains modes de réalisation, le système correcteur d'effet POGO forme une pièce monobloc réalisée de préférence par fabrication additive. Elle peut par exemple être réalisée en alliage base nickel ou en alliage base aluminium.

Le présent exposé concerne également un moteur-fusée, comprenant un système correcteur d'effet POGO selon l'un quelconque des modes de réalisation précédents.

Le présent exposé concerne également un véhicule comprenant au moins un moteur-fusée selon l'exposé.

Dans le présent exposé, les termes « longitudinal », « transversal », « axial », « radial », « tangentiel », « intérieur », « extérieur » et leurs dérivés sont définis par rapport à la direction curviligne de la partie de conduite ; on entend par « plan axial » un plan passant par la direction curviligne de la partie de conduite et par « plan radial » un plan perpendiculaire à cette direction curviligne ; les termes « inférieur », « supérieur », « horizontal », « vertical » et leurs dérivés sont définis par rapport à la direction locale de la gravité, naturelle ou artificielle ; enfin, les termes « amont » et « aval » sont définis par rapport à la circulation du propergol dans la partie de conduite.

Les caractéristiques et avantages précités, ainsi que d'autres, apparaîtront à la lecture de la description détaillée qui suit, d'exemples de réalisation du dispositif et du procédé proposés. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.
La FIG 1 est une représentation schématique d'un véhicule spatial comprenant un système correcteur d'effet POGO selon l'exposé.
Les FIG 2A et 2B sont des représentations schématiques en coupe d'un premier exemple de système correcteur d'effet POGO dans un premier état et un deuxième état.
La FIG 3 est une représentation schématique en perspective et en coupe du premier exemple de système correcteur d'effet POGO.
La FIG 4 est une représentation schématique en perspective et en coupe d'un deuxième exemple de système correcteur d'effet POGO.
La FIG 5 est une représentation schématique en coupe d'un troisième exemple de système correcteur d'effet POGO.
La FIG 6 est un graphe illustrant les différents modes de structure d'un moteur-fusée ainsi que les différents modes hydrauliques obtenus à l'aide d'un système correcteur d'effet POGO selon l'exposé.

### DESCRIPTION DETAILLEE D'EXEMPLE(S) DE REALISATION

Afin de rendre plus concrète l'invention, des exemples de systèmes correcteurs d'effet POGO sont décrits en détail ci-après, en référence aux dessins annexés. Il est rappelé que l'invention ne se limite pas à ces exemples.

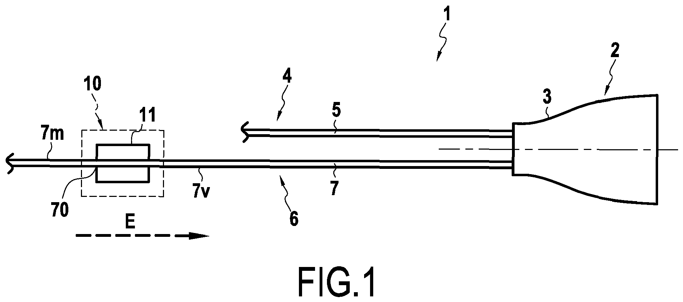

La FIG 1 représente très schématiquement un véhicule spatial 1, tel qu'un étage de lanceur spatial. Le véhicule 1 comprend un moteur-fusée à propergol liquide 2. Le moteur-fusée 2 comprend une chambre de propulsion 3 intégrant une chambre de combustion et une tuyère convergente-divergente, comme cela est connu.

La chambre de propulsion 3 est alimentée en deux propergols liquides par deux systèmes d'alimentation 4 et 6, comprenant chacun une conduite d'alimentation en propergol 5 et 7. Le premier système d'alimentation 4 n'est représenté que partiellement.

Le deuxième système d'alimentation 6 est pourvu d'un système correcteur POGO capacitif 10, désigné ci-après par « SCP » par commodité.

Dans toute la suite du présent exposé, les termes « amont » et « aval » s'entendront par rapport au SCP 10, en suivant le sens de circulation du propergol liquide vers le moteur-fusée 2.

Le SCP 10 comprend un accumulateur hydraulique 11 et une partie de conduite d'alimentation 70. La partie de conduite d'alimentation 70 est configurée pour être reliée en amont à une partie amont 7m de la conduite d'alimentation 7, et en aval à une partie aval 7v de la conduite d'alimentation 7. La direction E d'écoulement du propergol liquide est indiquée par une flèche sur les figures. La partie amont 7m et la partie aval 7v ont, par exemple, une section circulaire.

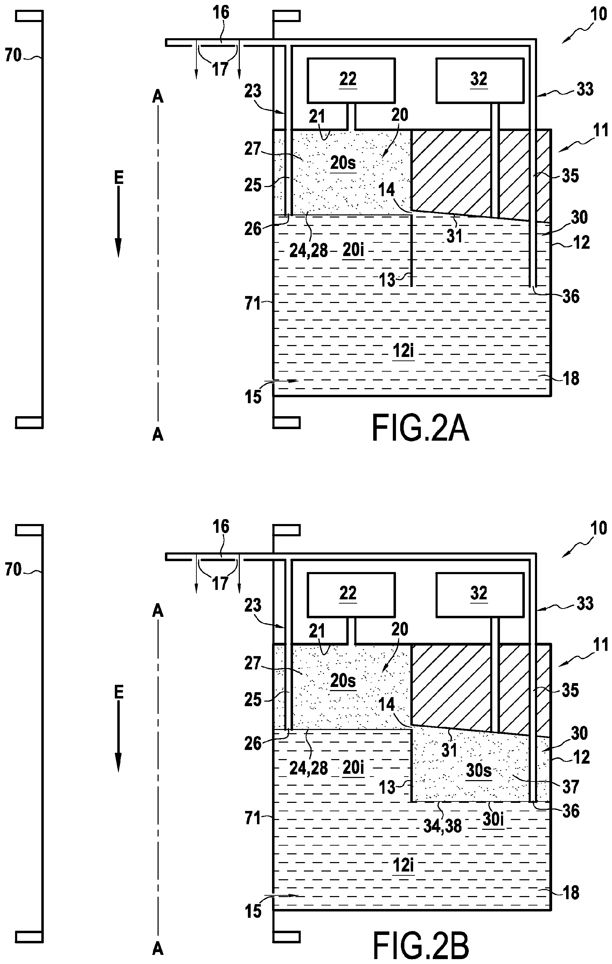

Les FIG 2A et B illustrent de manière schématique un premier exemple d'un tel SCP 10. L'accumulateur hydraulique 11 comprend un réservoir 12 dont la partie supérieure est scindée à l'aide d'une paroi verticale de partition 13 définissant une première cavité 20 et une deuxième cavité 30. La paroi supérieure 31 de la deuxième cavité 30 est située à un niveau inférieur à la paroi supérieure 21 de la première cavité 20 ; la paroi supérieure 31 est en outre légèrement inclinée en direction de la paroi de partition 13 et plus précisément en direction d'au moins un orifice de communication 14 pratiqué dans la paroi de partition 13 au sommet de la deuxième cavité 30. Dès lors, en raison de la différence de hauteur des parois supérieures 21, 31 des première et deuxième cavités 20, 30, l'orifice de communication 14 débouche sensiblement au milieu de la première cavité 20. Un premier injecteur de gaz 22 est prévu dans une partie supérieure 20s de la première cavité tandis qu'un deuxième injecteur de gaz 32 est prévu dans une partie supérieure 30s de la deuxième cavité 30, de préférence au sommet de la cavité 30. Au moins le deuxième injecteur de gaz 32, et de préférence chaque injecteur de gaz 22, 32, est commandable de manière à pouvoir activer ou désactiver sur commande l'injection de gaz. La partie inférieure 12i du réservoir 12, sur laquelle s'ouvrent chacune des cavités 20, 30, est reliée pour sa part à la partie de conduite d'alimentation 70 par au moins un passage de prélèvement 15 prenant ici la forme d'orifices de prélèvement pratiqués dans la paroi 71 de la partie de conduite d'alimentation 70. Ainsi, grâce à ce passage de prélèvement 15, du propergol issu de la partie de conduite 70 peut pénétrer dans la partie inférieure 12i du réservoir 12 ainsi que, le cas échéant, dans les cavités 20, 30.

Dans le présent exposé, la partie « supérieure » 20s, 30s des cavités 20, 30 désigne la partie de la cavité 20, 30 dans laquelle du gaz tend à s'accumuler, lorsque l'injecteur 22, 32 correspondant est actif, en raison de sa densité plus faible que celle du propergol liquide circulant dans la conduite 7, et en raison de l'accélération subie par le SCP 10 lorsque le moteur-fusée 2 fonctionne. À l'inverse, la partie « inférieure » 20i, 30i des cavités 20, 30 désigne la partie de la cavité 20, 30 dans laquelle le liquide tend à s'accumuler en raison de sa densité plus importante, et en raison de l'accélération subie par le SCP 10 lorsque le moteur-fusée 2 fonctionne. Dans certains exemples, comme celui représenté ici, l'interface liquide-gaz 38 de la deuxième cavité 30 peut se situer à l'extrémité inférieure de la deuxième cavité 30 : dès lors, sauf en cas de ballotement de la bulle de gaz 37 et de l'interface liquide-gaz 38, le propergol 18 s'étend à l'entrée de la cavité 30 mais ne pénètre pas dans cette dernière : dans ces exemples, le volume de la partie inférieure 30i de la cavité est ainsi réduit à zéro.

Chaque cavité 20, 30 comprend également un passage de rejet 23, 33 débouchant d'une part dans la cavité 20, 30 à un niveau intermédiaire 24, 34 séparant les parties supérieure 20s, 30s et inférieure 20i, 30i de chaque cavité 20, 30, et, d'autre part, dans la partie de conduite d'alimentation 70 en amont du passage de prélèvement 15.

Dans cet exemple, chaque passage de rejet 23, 33 prend la forme d'un tube plongeur 25, 35 plongeant dans la cavité 20, 30 jusqu'à une bouche 26, 36 ouverte au niveau intermédiaire 24, 34 de la cavité 20, 30 ; ces tubes 25, 35 se rejoignent à leur extrémité supérieure en un tube de rejet 16 pénétrant dans la partie de conduite 70 et muni d'orifices de rejet 17. Toutefois, dans d'autres exemples, chaque passage de rejet pourrait aboutir à un tube de rejet distinct, chaque tube de rejet pénétrant dans la partie de conduite et étant muni d'orifices de rejet distincts.

Comme cela est visible sur les FIG 2A et 2B, la bouche 26 du tube plongeur 25 de la première cavité 20 se situe au même niveau que l'orifice de communication 14. Autrement dit, lorsque l'injecteur 22 de la première cavité 20 est activé, l'interface liquide-gaz de la première cavité 20 s'étend au niveau de l'orifice de communication 14, soit au niveau de la paroi supérieure 31 de la deuxième cavité 30. De plus, dans cet exemple, l'extrémité inférieure de la paroi de partition 13 se situe sensiblement au même niveau que la bouche 36 du deuxième passage de rejet 33.

Dans un exemple typique, le propergol liquide circulant dans la conduite d'alimentation 7 et la partie de conduite d'alimentation 70 est de l'oxygène liquide (LOx), et le gaz injecté par les injecteurs 22, 32 est de l'hélium (He).

Pendant que le moteur-fusée 2 fonctionne, le premier injecteur 22 injecte un débit constant de gaz dans la première cavité 20, ce qui crée une bulle de gaz 27 s'accumulant dans la partie supérieure 20s de la première cavité 20, formant alors une interface 28 entre le gaz et le propergol liquide 18 présent dans la partie inférieure 12i du réservoir 12.

De la même manière, lorsque le deuxième injecteur 32 est activé, il injecte un débit constant de gaz dans la deuxième cavité 30, ce qui crée une bulle de gaz 37 s'accumulant dans la partie supérieure 30s de la première cavité 30, formant alors une interface 38 entre le gaz et le propergol liquide 18 présent dans la partie inférieure 12i du réservoir 12.

Par ailleurs, l'écoulement du propergol autour du tube de rejet 16 dans la partie de conduite 70 entraîne une dépression hydrostatique dans le tube de rejet 16 : la pression régnant au niveau des orifices de rejet 17 est ainsi inférieure à la pression régnant dans le réservoir 12 au niveau de la bouche 26 du passage de rejet 23 : une aspiration est dès lors générée dans le passage de rejet 23 de telle sorte que l'excès de gaz dépassant le niveau intermédiaire 24 de la première cavité 20 est aspiré et rejeté dans la partie de conduite 70. Il en va de même avec le passage de rejet 33 de la deuxième cavité 30 qui aspire soit l'excès de gaz de la deuxième cavité lorsque le deuxième injecteur 32 est activé, soit du propergol lorsque le deuxième injecteur 32 est désactivé et que la deuxième cavité 30 est pleine de liquide.

Dans la FIG 2A, le SCP 10 est dans un premier état dans lequel seul le premier injecteur 22 est activé. Dès lors, seule la première cavité 20 comprend une bulle de gaz 27, dont le volume est maintenu sensiblement constant par le premier passage de rejet 23, tandis que la deuxième cavité 30 est intégralement remplie de propergol 18. Ainsi, l'accumulateur hydraulique 11 contient un premier volume de gaz V1, ce premier volume V1 conférant à l'accumulateur une première capacité C1 modifiant, comme cela est connu, la fréquence propre, c'est à dire le mode hydraulique, de l'alimentation en propergol.

Dans la FIG 2B, le SCP 10 est dans un deuxième état dans lequel à la fois le premier injecteur 22 et le deuxième injecteur 32 sont activés. Dès lors, la première cavité 20 comprend toujours sa bulle de gaz 27, dont le volume reste sensiblement inchangé, tandis que la deuxième cavité 30 comprend désormais une deuxième bulle de gaz 37 dont le volume est maintenu sensiblement constant grâce au deuxième passage de rejet 33. Ainsi, l'accumulateur hydraulique 11 contient désormais un deuxième volume de gaz V2, supérieur au premier volume de gaz V1, ce qui lui confère une deuxième capacité C2, supérieure à la première capacité C1, abaissant ainsi la fréquence propre du mode hydraulique de la conduite d'alimentation en propergol.

Pour revenir dans le premier état, et donc à la première fréquence propre hydraulique, il suffit de désactiver à nouveau le deuxième injecteur 32. Lors de l'arrêt du deuxième injecteur 32, le volume de gaz 37 précédemment présent dans la deuxième cavité 30 s'écoule par gravité dans la première cavité 20 via l'orifice de communication 14 où il est ensuite évacué par le premier passage de rejet 23. On retrouve dès lors la situation dans laquelle seule la première cavité 20 comprend une bulle de gaz 27 tandis que la deuxième cavité 30 est intégralement remplie de propergol 18.

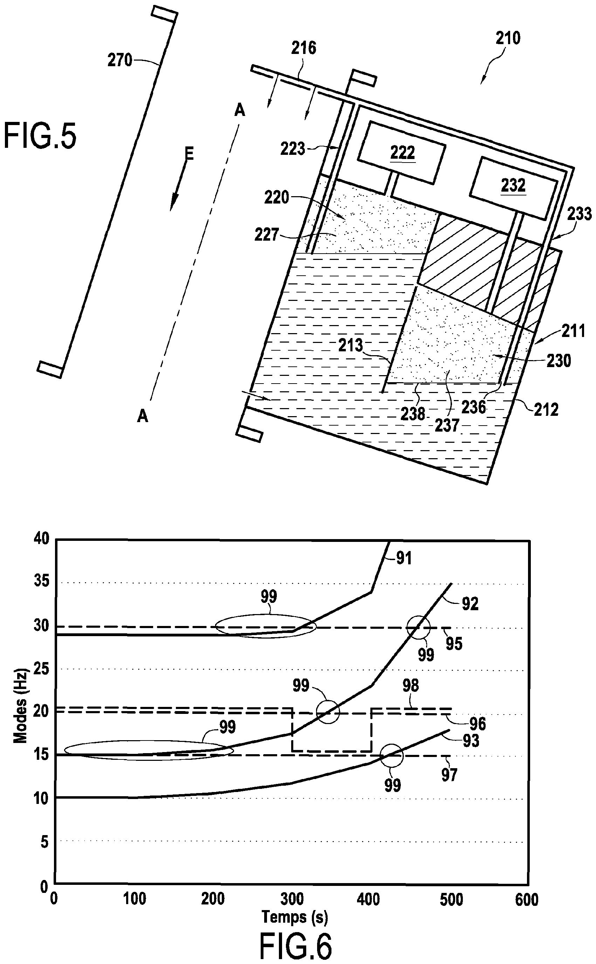

La FIG 6 illustre l'impact du changement de capacité de l'accumulateur hydraulique 11 sur la gestion du risque POGO. Cette FIG 6 représente de manière arbitraire et purement illustrative différents modes de structure 91, 92 et 93 du moteur-fusée 2 en fonction du temps de vol. Comme cela est visible sur cette figure, ces modes de structure 91, 92, 93 évoluent au cours du temps, en raison notamment de la vidange progressive des réservoirs au cours du vol. Cette FIG 6 représente par ailleurs le mode hydraulique non-corrigé 95 de l'alimentation en propergol en l'absence de SCP, ce mode hydraulique 95 étant normalement constant durant tout le temps de vol. Elle représente également un premier mode hydraulique corrigé 96 lorsque le SCP 10 est dans son premier état et un deuxième mode hydraulique corrigé 97 lorsque le SCP 10 est dans son deuxième état.

Il apparait alors que la fréquence de ce mode hydraulique non-corrigé 95 est proche de, ou égale à, la fréquence de certains modes de structure 91, 92 à plusieurs reprises au cours du vol (zones 99) : un tel couplage entraîne alors un risque élevé d'apparition d'un phénomène POGO. On remarque toutefois que les modes hydrauliques corrigés 96 et 97 présentent eux-aussi des zones dangereuses 99 entraînant des risques de couplage avec certaines modes de structures 92, 93 à certains moments du vol.

Toutefois, grâce au SCP 10 selon le présent exposé, il est possible de régler à volonté la capacité de l'accumulateur 11 entre deux capacités C1 et C2 distincte en activant ou en désactivant le deuxième injecteur 32 : il est ainsi possible de sélectionner, à chaque moment du vol, le mode hydraulique corrigé 96 ou 97 le plus éloigné des modes de structures 91, 92, 93 à ce moment donné du vol. Ainsi, comme le montre la courbe 98 de la FIG 6 (présentant un léger décalage par rapport aux modes hydrauliques 96, 97 afin d'assurer une meilleure visibilité de la figure), il est possible de commencer le vol avec le SCP dans son premier état, c'est-à-dire avec le deuxième injecteur 32 désactivé, afin de sélectionner le premier mode hydraulique corrigé 96. Puis, lorsque la zone dangereuse 99 de croisement avec le mode de structure 92 approche, d'activer le deuxième injecteur 32 de manière à constituer la deuxième bulle de gaz 37 dans la deuxième cavité 30 et ainsi basculer sur le deuxième mode hydraulique corrigé 97. Enfin, lorsque le risque pesant sur le premier mode hydraulique corrigé 96 est passé et qu'approche une zone de risque 99 pour le deuxième mode hydraulique corrigé 97, le deuxième injecteur 32 est à nouveau désactivé, ce qui entraîne la purge de tout le gaz de la deuxième cavité 30 et permet de basculer à nouveau sur le premier mode hydraulique corrigé 96.

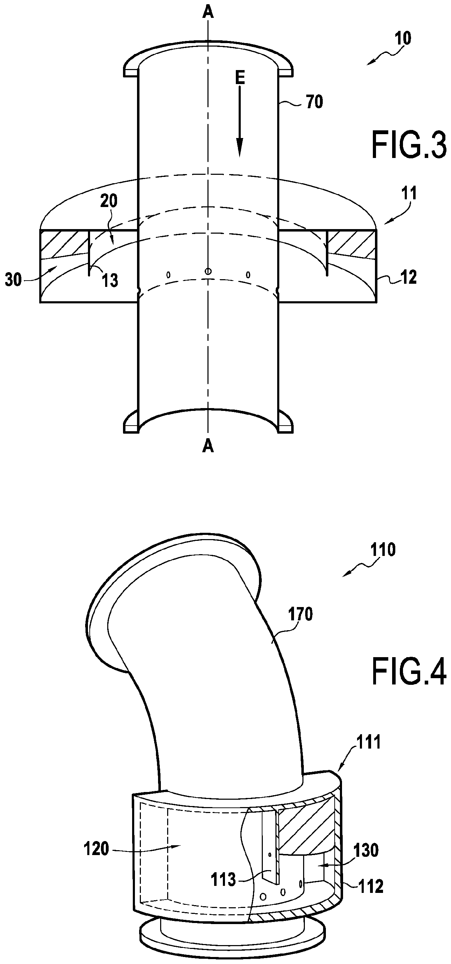

Des détails de conception vont maintenant être décrits en référence aux FIG 3, 4 et 5.

La FIG 3, correspondant toujours au premier exemple, est une vue en perspective et en coupe du SCP 10. Dans cet exemple, la partie de conduite 70 est rectiligne d'axe A et l'accumulateur hydraulique 11 est disposé de manière axisymétrique autour de la partie de conduite 70 : les première et deuxième cavités 20, 30 sont alors disposées de manière concentrique avec, de préférence, la deuxième cavité 30 située radialement à l'extérieur de la première cavité 20.

La FIG 4 illustre un deuxième exemple de réalisation de SCP 110. Ce deuxième exemple est analogue au premier exemple en de nombreux points et seules les spécificités de ce deuxième exemple seront donc décrites en détail. Dans cet exemple, la partie de conduite 170 est coudée et l'accumulateur hydraulique s'étend seulement sur sensiblement 180° autour de la partie de conduite 170, du côté extérieur du coude : les première et deuxième cavités 120, 130 sont alors disposée l'une à côté de l'autre dans le sens circonférentiel.

La FIG 5 illustre un troisième exemple de réalisation de SCP 210. Ce troisième exemple est analogue au premier exemple en de nombreux points et seules les spécificités de ce troisième exemple seront donc décrites en détail. Dans cet exemple, la paroi de partition 213 s'étend plus bas que la bouche 236 du deuxième passage de rejet 233. De cette manière, les bulles de gaz 227, 237 présentes dans les cavités 220, 230 peuvent balloter, par exemple sous l'effet d'accélérations latérales, en réduisant le risque que l'interface liquide-gaz 238 de la deuxième cavité 230 ne dépasse l'extrémité inférieure de la paroi 213 et donc que du gaz ne s'échappe de la deuxième cavité par-dessous la paroi de partition 213.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Système correcteur d'effet POGO pour un système d'alimentation en propergol liquide d'un moteur-fusée, comprenant
une partie de conduite d'alimentation (70) en propergol liquide,
un accumulateur hydraulique (11), comprenant un réservoir (12) relié à la partie de conduite d'alimentation (70) par au moins un passage de prélèvement (15),
le réservoir (12) comprenant au moins une première et une deuxième cavité (20, 30), fermées chacune par une paroi supérieure (21, 31), **caractérisé en ce que** la paroi supérieure (21) de la première cavité (20) s'étend à un niveau supérieur à celui de la paroi supérieure (31) de la deuxième cavité (30),
**en ce que** la première et la deuxième cavités (20, 30) sont munies chacune d'une alimentation en gaz distincte (22, 32), l'alimentation en gaz (32) de la deuxième cavité (30) au moins étant commandable,
**en ce que** la deuxième cavité (30) comprend à son extrémité supérieure au moins un passage de communication (14) la reliant à la première cavité (20), et
**en ce que** chaque cavité (20, 30) est reliée à la partie de conduite d'alimentation (70) par au moins un passage de rejet (23, 33) débouchant dans ladite cavité (20, 30) à un niveau intermédiaire (24, 34) compris entre ledit au moins un passage de prélèvement (15) et la paroi supérieure (21, 31) de ladite cavité (20, 30), le passage de rejet (33) de la deuxième cavité (30) débouchant dans la deuxième cavité (30) à un niveau inférieur au niveau auquel le passage de rejet (23) de la première cavité (20) débouche dans la première cavité (20).

2. Système correcteur d'effet POGO selon la revendication 1, dans lequel la paroi supérieure (31) de la deuxième cavité (30) est inclinée.

3. Système correcteur d'effet POGO selon la revendication 1 ou 2, dans lequel le passage de rejet (23) de la première cavité (20) débouche dans la première cavité (20) sensiblement au même niveau que l'orifice de communication (14).

4. Système correcteur d'effet POGO selon l'une quelconque des revendications 1 à 3, dans lequel le réservoir (12) comprend une paroi de partition (13) séparant les première et deuxième cavités (20, 30).

5. Système correcteur d'effet POGO selon la revendication 4, dans lequel le passage de communication (14) est prévu au sommet de la paroi de partition (13).

6. Système correcteur d'effet POGO selon la revendication 4 ou 5, dans lequel la paroi de partition (13) s'étend dans une partie seulement du réservoir (12).

7. Système correcteur d'effet POGO selon la revendication 6, dans lequel l'extrémité inférieure de la paroi de partition (213) se situe à un niveau inférieur au niveau auquel le deuxième passage de rejet (233) débouche dans la deuxième cavité (230).

8. Système correcteur d'effet POGO selon la revendication 6 ou 7, dans lequel la section de passage séparant l'extrémité inférieure de la paroi de partition (213) de la paroi inférieure du réservoir (212) est au plus cinq fois plus grande, de préférence au plus deux fois plus grande, que la section de passage du passage de prélèvement (15).

9. Système correcteur d'effet POGO selon l'une quelconque des revendications 1 à 8, dans lequel la section de passage du passage de communication (14) est calibré de manière à permettre la vidange d'une bulle de gaz (37) présente dans la deuxième cavité (30) en moins de 30 s, de préférence en moins de 1 s.

10. Système correcteur d'effet POGO selon l'une quelconque des revendications 1 à 9, dans lequel les passages de rejet (23, 33) des première et deuxième cavités (20, 30) débouchent dans la partie de conduite d'alimentation (70) par des orifices de rejet (17) communs.

11. Moteur-fusée, comprenant un système correcteur d'effet POGO selon l'une quelconque des revendications précédentes.

## Patentansprüche

1. System zur Korrektur des POGO-Effekts für ein System zur Versorgung mit flüssigem Treibstoff eines Raketenmotors, umfassend
einen Leitungsteil (70) zur Versorgung mit flüssigem Treibstoff,
einen hydraulischen Akkumulator (11), umfassend ein Reservoir (12), das mit dem Versorgungsleitungsteil (70) durch zumindest einen Entnahmedurchgang (15) verbunden ist,
wobei das Reservoir (12) zumindest einen ersten und einen zweiten Hohlraum (20, 30) umfasst, die jeweils durch eine obere Wand (21, 31) verschlossen sind, **dadurch gekennzeichnet, dass** die obere Wand (21) des ersten Hohlraums (20) sich auf einem Niveau erstreckt, das höher liegt als jenes der oberen Wand (31) des zweiten Hohlraums (30),
dass der erste und der zweite Hohlraum (20, 30) jeweils mit einer eigenen Gasversorgung (22, 32) versehen sind, wobei zumindest die Gasversorgung (32) des zweiten Hohlraums (30) steuerbar ist,
dass der zweite Hohlraum (30) an seinem oberen Ende zumindest einen Kommunikationsdurchgang (14) umfasst, der ihn mit dem ersten Hohlraum (20) verbindet, und
dass jeder Hohlraum (20, 30) mit dem Versorgungsleitungsteil (70) durch zumindest einen Entladedurchgang (23, 33) verbunden ist, der in den Hohlraum (20, 30) auf einem mittleren Niveau (24, 34) zwischen dem zumindest einen Entnahmedurchgang (15) und der oberen Wand (21, 31) des Hohlraums (20, 30) mündet, wobei der Entladedurchgang (33) des zweiten Hohlraums (30) in den zweiten Hohlraum (30) auf einem Niveau mündet, das unter dem Niveau liegt, auf welchem der Entladedurchgang (23) des ersten Hohlraums (20) in den ersten Hohlraum (20) mündet.

2. System zur Korrektur des POGO-Effekts nach Anspruch 1, wobei die obere Wand (31) des zweiten Hohlraums (30) schräg ist.

3. System zur Korrektur des POGO-Effekts nach Anspruch 1 oder 2, wobei der Entladedurchgang (23) des ersten Hohlraums (20) im Wesentlichen auf demselben Niveau wie die Kommunikationsöffnung (14) in den ersten Hohlraum (20) mündet.

4. System zur Korrektur des POGO-Effekts nach einem der Ansprüche 1 bis 3, wobei das Reservoir (12) eine Trennwand (13) umfasst, die den ersten und zweiten Hohlraum (20, 30) voneinander trennt.

5. System zur Korrektur des POGO-Effekts nach Anspruch 4, wobei der Kommunikationsdurchgang (14) am oberen Ende der Trennwand (13) vorgesehen ist.

6. System zur Korrektur des POGO-Effekts nach Anspruch 4 oder 5, wobei die Trennwand (13) sich nur in einem Teil des Reservoirs (12) erstreckt.

7. System zur Korrektur des POGO-Effekts nach Anspruch 6, wobei das untere Ende der Trennwand (213) sich auf einem Niveau befindet, das unter dem Niveau liegt, auf welchem der zweite Entladedurchgang (233) in den zweiten Hohlraum (230) mündet.

8. System zur Korrektur des POGO-Effekts nach Anspruch 6 oder 7, wobei der Durchgangsquerschnitt, der das untere Ende der Trennwand (213) von der unteren Wand des Reservoirs (212) trennt, höchstens fünfmal größer, vorzugsweise höchstens zweimal größer, ist als der Durchgangsquerschnitt des Entnahmedurchgangs (15).

9. System zur Korrektur des POGO-Effekts nach einem der Ansprüche 1 bis 8, wobei der Durchgangsquerschnitt des Kommunikationsdurchgangs (14) so kalibriert ist, dass die Entlüftung einer Gasblase (37), die in dem zweiten Hohlraum (30) vorhanden ist, in weniger als 30 s, vorzugsweise in weniger als 1 s, erlaubt wird.

10. System zur Korrektur des POGO-Effekts nach einem der Ansprüche 1 bis 9, wobei die Entladedurchgänge (23, 33) des ersten und zweiten Hohlraums (20, 30) durch gemeinsame Entladeöffnungen (17) in den Versorgungsleitungsteil (70) münden.

11. Raketenmotor, umfassend ein System zur Korrektur des POGO-Effekts nach einem der vorhergehenden Ansprüche.

## Claims

1. A POGO effect correcting system for a system for supplying liquid propellant of a rocket engine, comprising:
a liquid propellant supply line portion (70),
a hydraulic accumulator (11), comprising a tank (12) connected to the supply line portion (70) through at least one withdrawal passage (15),
the tank (12) comprising at least a first and a second cavity (20, 30), each closed by an upper wall (21, 31), **characterized in that** the upper wall (21) of the first cavity (20) extends to a level higher than that of the upper wall (31) of the second cavity (30),
**in that** the first and second cavities (20, 30) are each provided with a separate gas supply (22, 32), at least the gas supply (32) to the second cavity (30) being controllable,
**in that** the second cavity (30) comprises at its upper end at least one communication passage (14) connecting it to the first cavity (20), and
**in that** each cavity (20, 30) is connected to the supply line portion (70) through at least one discharge passage (23, 33) opening out into said cavity (20, 30) at an intermediate level (24, 34) comprised between said at least one withdrawal passage (15) and the upper wall (21, 31) of said cavity (20, 30), the discharge passage (33) of the second cavity (30) opening out into the second cavity (30) at a level lower than the level at which the discharge passage (23) of the first cavity (20) opens out into the first cavity (20).

2. The POGO effect correcting system according to claim 1, wherein the upper wall (31) of the second cavity (30) is inclined.

3. The POGO effect correcting system according to claim 1 or 2, wherein the discharge passage (23) of the first cavity (20) opens out into the first cavity (20) substantially at the same level as the communication port (14).

4. The POGO effect correcting system according to any one of claims 1 to 3, wherein the tank (12) comprises a partition wall (13) separating the first and second cavities (20, 30).

5. The POGO effect correcting system according to claim 4, wherein the communication passage (14) is provided at the top of the partition wall (13).

6. The POGO effect correcting system according to claim 4 or 5, wherein the partition wall (13) extends in only one portion of the tank (12).

7. The POGO effect correcting system according to claim 6, wherein the lower end of the partition wall (213) is located at a level lower than the level at which the second discharge passage (233) opens out into the second cavity (230).

8. The POGO effect correcting system according to claim 6 or 7, wherein the passage section separating the lower end of the partition wall (213) from the lower wall of the tank (212) is at most five times greater than, preferably at most twice as large as, the passage section of the withdrawal passage (15).

9. The POGO effect correcting system according to any one of claims 1 to 8, wherein the passage section of the communication passage (14) is calibrated so as to allow emptying of a gas bubble (37) present in the second cavity (30) in less than 30 s, preferably in less than 1 s.

10. The POGO effect correcting system according to any one of claims 1 to 9, wherein the discharge passages (23, 33) of the first and second cavities (20, 30) open out into the supply line portion (70) through common discharge ports (17).

11. A rocket engine, comprising a POGO effect correcting system according to any one of the preceding claims.
